# FASCICULE DE BREVET EUROPEEN

(11) **EP 0 581 709 B1**
(45) Date de publication et mention de la délivrance du brevet: **18.03.1998**
(21) Numéro de dépôt: 93440058.1
(22) Date de dépôt: 29.07.1993
(51) Int. Cl.: B60P 3/08

(54) **Mécanisme de blocage en positions rapprochées pour dispositif de levage d'une plate-forme porteuse d'un chargement**
Blockiermechanismus für eine Hebevorrichtung einer angehobenen Lastplatform
Locking mechanism for a lifting device on a load-carrying platform

(30) Priorité: 31.07.1992 FR 9209685
(43) Date de publication de la demande: 02.02.1994
(73) Titulaire: LOHR INDUSTRIE, 67980 Hangenbieten (FR)
(72) Inventeur: Scheer, Daniel, F-67190 Mutzig (FR)
(74) Mandataire: Metz, Paul

(56) Documents cités:
- EP-A- 0 343 516
- FR-A- 1 297 191
- LU-A- 68 683

## Description

La présente invention concerne un mécanisme de blocage en positions rapprochées pour un dispositif de levage dit à compas d'une plate-forme porteuse d'un chargement.

On utilise fréquemment ce genre de dispositif de levage à compas dans le domaine des porte-voitures. Il s'avère bien adapté pour lever et abaisser rapidement la plate-forme supérieure de chargement d'une position rabattue, par exemple de roulage à vide, jusqu'à une position élevée, par exemple pour le transport de véhicules automobiles.

Cette position de transport correspond à une position haute de la plate-forme qui est ensuite ramenée vers le bas le plus près possible des toits des voitures de l'étage inférieur de chargement.

En effet, pour des raisons diverses liées à la réglementation routière, mais aussi à des impératifs économiques, on souhaite pouvoir ajuster au mieux, c'est-à-dire au plus près, la hauteur d'élévation de la plate-forme à celle des véhicules transportés.

On peut citer à cet effet les dispositifs de levage à compas brevetés par la société Lohr en France sous les n° 2 213 856 et 2 317 125.

Le vérin d'actionnement abaisse et lève la plate-forme pour permettre les manoeuvres de chargement et de déchargement.

Le blocage en position de ces dispositifs de levage s'effectue par exemple par l'intermédiaire d'un mécanisme de verrouillage situé au pied du poteau basculant, comportant un doigt rétractable qui vient s'engager dans l'une des ouvertures ou emboutis d'une suite linéaire dans une platine mécanique. Ce verrouillage assure l'immobilisation du poteau basculant et de ce fait le blocage en position de l'ensemble articulé de levage.

Comme indiqué ci-dessus, on souhaite pouvoir approcher le plus possible la sous-face de la plate-forme du toit des véhicules transportés, quel que soit le gabarit de ceux-ci, et aussi exploiter au mieux l'espace disponible.

Mais les différences de hauteurs dans les différents cas de chargement ne correspondent pas à des positions successives d'immobilisation de la plate-forme.

Or, l'intervalle entre deux positions successives d'immobilisation de la plate-forme est en relation directe pour ce mécanisme de verrouillage avec l'intervalle existant entre deux ouvertures consécutives de blocage. Pour de simples raisons de rigidité et de solidité mécaniques de la platine, l'intervalle entre les ouvertures ne peut descendre en-dessous d'une distance minimale. Cette distance minimale se traduit au niveau de l'extrémité du poteau basculant par un écart minimal entre deux positions successives d'immobilisation de la plate-forme jugé trop important en raison de l'espace qu'il laisse inexploité.

Autrement dit, on ne peut diviser assez finement les intervalles existant entre les différentes positions successives d'immobilisation de la plate-forme supérieure, car on ne peut réaliser des ouvertures successives de blocage trop rapprochées sans mettre en cause la tenue mécanique du verrouillage.

Par ailleurs, on commence à utiliser des poteaux de levage à grand débattement comme par exemple ceux décrits dans la demande de brevet n° 91 07109 au nom du déposant, et plus généralement tous les dispositifs de levage basculants qui présentent un allongement supplémentaire du poteau lors de son mouvement de levage.

Ces poteaux présentent l'avantage important de demander au vérin un effort constant tout au long de la course.

Par contre, la cinématique n'est pas linéaire, c'est-à-dire que le déplacement de l'extrémité du poteau n'est pas proportionnel à l'écart angulaire. L'extrémité du poteau se déplace plus vite vers le haut dans un plan vertical pour les grandes valeurs d'inclinaison angulaire en raison de l'allongement grandissant, par exemple proportionnel, du poteau.

Dans ces conditions, pour ce type de poteaux à grand débattement, les positions successives d'immobilisation de la plate-forme avec le mécanisme de verrouillage à ouvertures de blocage sont de plus en plus espacées pour les valeurs de plus grande inclinaison.

Or, celles-ci correspondent à la zone de travail.

Ainsi, pour ce type de poteaux à grand débattement, l'objectif d'optimiser l'intervalle entre deux positions successives d'immobilisation de la plate-forme ne peut être atteint avec le mécanisme de verrouillage décrit ci-dessus car il présente une succession d'ouvertures de blocage distantes les unes des autres d'un intervalle déjà trop important pour les dispositifs de levage classiques.

En utilisant des poteaux à grand débattement, les professionnels ne peuvent ajuster la hauteur de la plate-forme en position haute et par conséquent perdent encore plus sur l'espace existant entre le haut des véhicules à transporter et la position d'immobilisation de la plate-forme immédiatement suivante en raison de l'impossibilité de fractionner l'intervalle entre deux positions successives.

Cet espace non réductible de par les nécessités de tenue mécanique du mécanisme de verrouillage à ouvertures ou emboutis de blocage peut rendre le chargement hors gabarit ou sans possibilité de constituer un étage supplémentaire dans certains cas de chargement.

On connaît par ailleurs par la publication européenne KÄSSBOHRER EP n° 0 343 516 un ensemble de blocage en position de l'extrémité inférieure d'un bras oblique inclinable porteur d'une plate-forme de chargement de véhicules automobiles sur un camion ou sur une remorque.

Selon cette invention, le blocage est réalisé au moyen d'un mécanisme de verrouillage à doigt transversal se déplaçant le long d'une platine présentant des perforations dans lesquelles s'engage le doigt en vue de réaliser un blocage longitudinal. L'inconvénient de ce type de mécanisme de blocage concerne sa limitation vers le bas de l'intervalle entre deux positions de blocage.

En effet, pour des raisons mécaniques, le pas entre les perforations successives de la platine ne peut descendre en dessous d'une valeur minimale qui dépasse forcément le diamètre du doigt de verrouillage, diamètre devant rester au dessus d'une valeur lui conférant une résistance suffisante au cisaillement.

Ainsi, l'intervalle de saut entre deux positions successives de blocage de la plate-forme reste limité à une valeur jugée importante. Cette valeur ne pouvant être fractionnée impose de choisir la hauteur d'élévation de la plate-forme entre deux positions successives qui sont trop éloignées. Ce saut s'avère pénalisant pour assurer une optimisation du volume d'utilisation du chargement.

Dans la partie introductive de cette publication EP n° 0 343 516 il est question de dispositifs antérieurs utilisant une crémaillère.

Selon ces dispositifs, une came pivotante de blocage vient s'engager dans les structures de blocage d'une crémaillère couchée du type à dents obliques. Comme dans tous les ensembles à crémaillère de ce type, le mouvement d'engagement en vue du blocage s'effectue dans le plan du corps de crémaillère par rapport au corps de la crémaillère à la manière d'un cliquet.

On retrouve dans cet ensemble la même limitation en valeur du pas correspondant au saut entre deux positions successives de blocage. En effet, les dents obliques et les évidements entre deux dents successives ne peuvent descendre en taille en-dessous d'une certaine valeur au risque pour les dents de se briser à l'utilisation.

La présente invention a pour but de diminuer jusqu'à une valeur faible, même très faible, l'intervalle entre deux positions successives de blocage tout en gardant une résistance mécanique suffisante pour assurer la sécurité du maintien.

Comme indiqué, la présente invention a pour but de réduire le plus possible l'espace entre le haut des véhicules transportés à l'étage inférieur et la sous-face de la plate-forme supérieure de chargement jusqu'à la distance de sécurité en réduisant le plus possible jusqu'a sa suppression l'intervalle entre les positions d'immobilisation successives de la plate-forme dans la zone des hauteurs d'utilisation.

L'invention permet de réduire cet espace pour tous les types de poteaux de levage, plus particulièrement ceux à compas et à grand débattement, et plus généralement pour tous ceux dont la cinématique ne se développe pas de façon linéaire avec l'angle d'inclinaison, en divisant de façon beaucoup plus fine jusqu'à sa suppression l'intervalle entre deux positions successives d'immobilisation.

Un autre but concerne la rapidité et la facilité d'utilisation par le personnel assurant les manoeuvres de chargement et de déchargement.

Le dernier but de l'invention porte sur son caractère modulaire qui confère une grande facilité de montage et de démontage.

Pour atteindre simultanément tous ces objectifs, l'invention se caractérise en ce que le pied du poteau basculant de levage est articulé à pivotement sur une tête de blocage se déplaçant le long de la glissière, la glissière comprend une platine linéaire de blocage, la tête de blocage porte un patin d'immobilisation transversal en regard de la platine, la platine et le patin présentent des surfaces complémentaires, adaptées pour venir en contact ou en prise de blocage l'une contre ou dans l'autre, et en ce que le blocage puis le déblocage résultent d'un mouvement transversal de rapprochement puis d'éloignement de la platine et/ou du patin par un mécanisme d'actionnement.

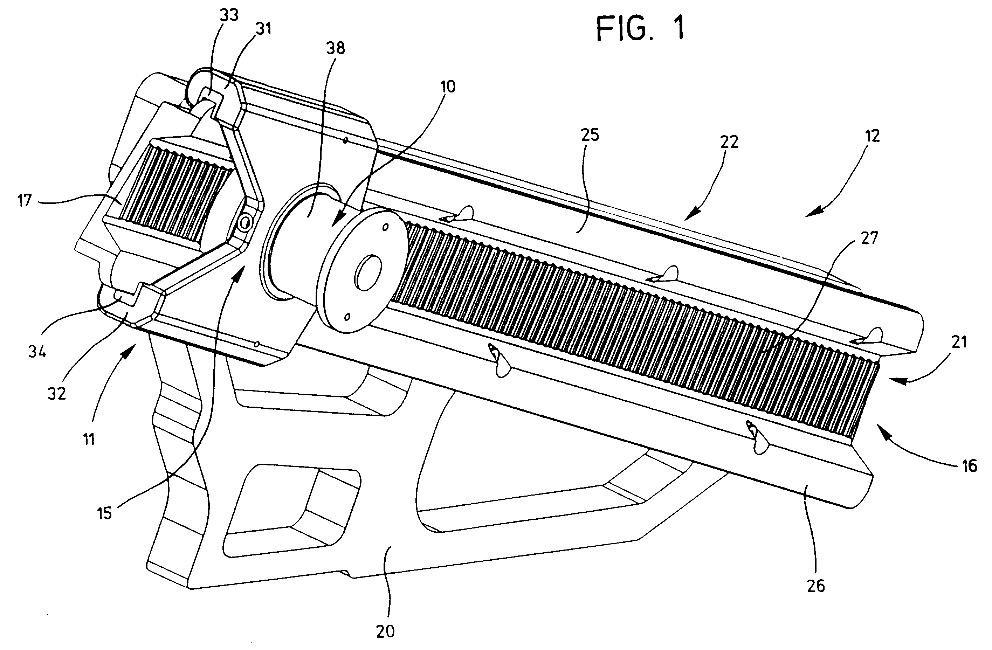

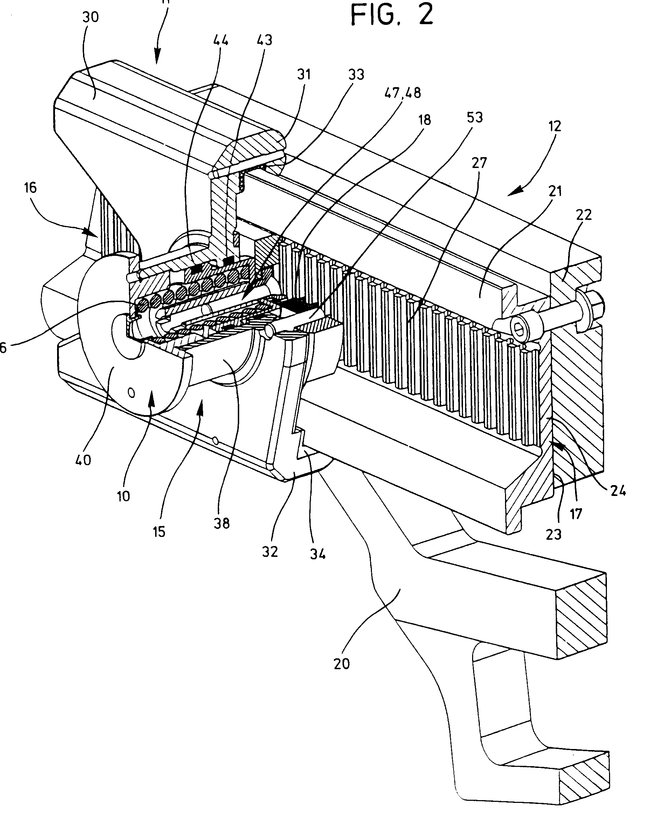

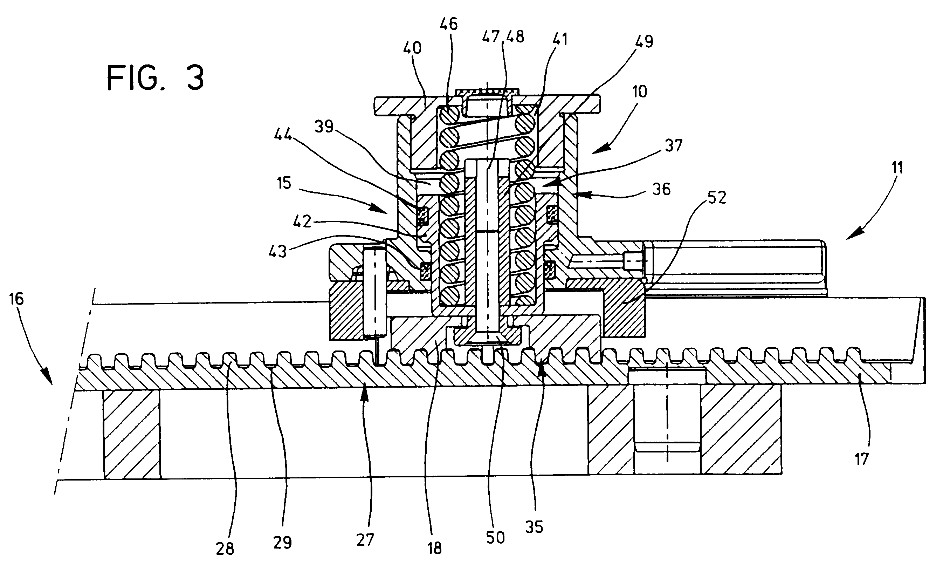

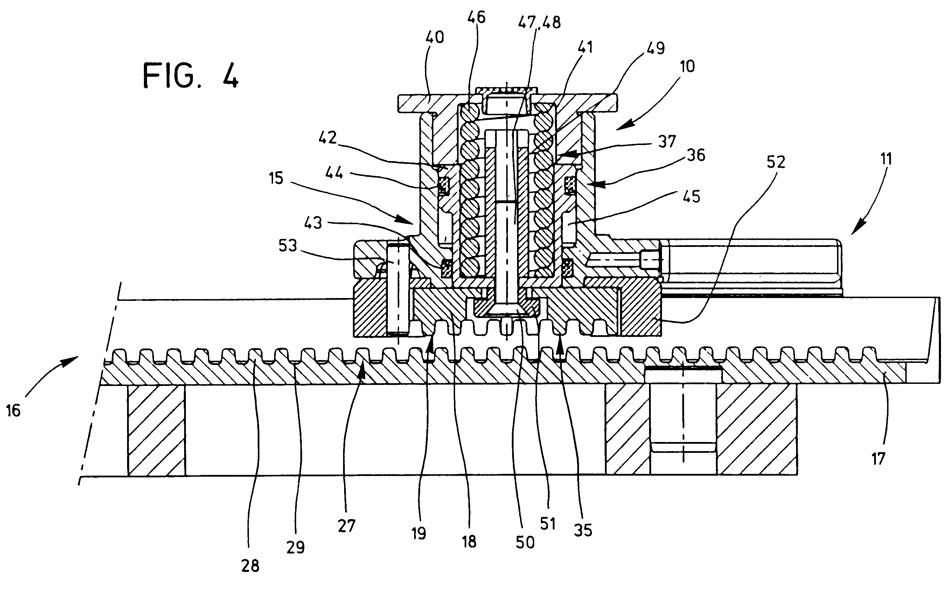

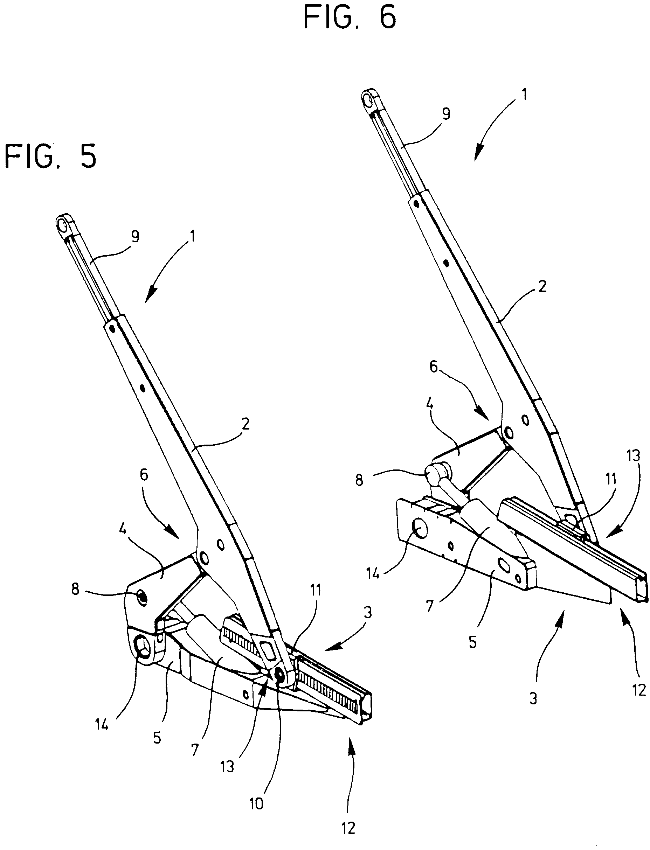

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue générale en perspective de l'ensemble du mécanisme de blocage selon l'invention ;
. la figure 2 est une vue en perspective de la partie centrale, tête de blocage ouverte ;
. la figure 3 est une vue en coupe longitudinale des moyens de blocage à l'état engagés ;
. la figure 4 est une vue en coupe longitudinale des moyens de blocage à l'état dissociés ;
. la figure 5 est une vue schématique en perspective d'un exemple de dispositif de levage à poteau inclinable à grand débattement vu de l'avant sur lequel est susceptible d'être appliqué le mécanisme de blocage selon l'invention ;
. la figure 6 est une vue analogue à celle de la figure 5 d'un exemple de dispositif de levage vu de l'arrière.

Le mécanisme de blocage en positions rapprochées selon la présente invention s'applique à tous les types de dispositifs de levage à poteau basculant, notamment ceux à compas.

Il s'applique, en particulier mais non exclusivement, aux dispositifs de levage à poteau dont la cinématique n'est pas réglée de façon linéaire.

Pour illustrer l'application, on décrira tout d'abord de façon générale un dispositif de levage 1 à grand débattement dont un exemple est représenté sur les figures 5 et 6.

Il se compose d'un poteau porteur basculant 2 de levage articulé autour d'une base mobile 3 en translation par rapport à un chassis, d'un bras oblique de soutien 4 monté pivotant sur une base fixe 5 par rapport au châssis et articulé par une articulation 6 de pivotement au poteau porteur basculant 2. Il se compose également d'un organe moteur, par exemple un vérin 7 monté pivotant dont la tige est articulée en 8 au voisinage de l'extrémité inférieure du bras oblique de soutien 4 au niveau de son coude. L'extrémité supérieure du bras oblique de soutien 4 se poursuit à l'intérieur du poteau basculant 2 de levage, par exemple par une extrémité coudée reliée par un mécanisme de renvoi de mouvement, par exemple à articulation et bielle de poussée, à une tige d'extension 9 montée coulissante dans le poteau basculant le long d'un profilé de guidage.

L'extrémité basse du poteau porteur basculant 2 de levage est montée pivotante par une articulation 10 sur la base 3 mobile en translation, par exemple au moyen d'un coulisseau, et plus particulièrement un chariot 11 se déplaçant le long d'une glissière 12 fixée en rive sur le châssis du véhicule porteur. Ce chariot se déplace de part et d'autre de la glissière 12 lors du basculement du poteau entre ses deux positions extrêmes.

Afin d'immobiliser le poteau dans une inclinaison donnée, on prévoit un blocage mécanique du chariot 11 par rapport à la glissière 12. Cette immobilisation est réalisée par le mécanisme de blocage selon l'invention.

Ce mécanisme immobilise le pied 13 du poteau. Il le bloque en inclinaison en créant une triangulation qui rend indéformable l'ensemble articulé formé par les articulations 6, 10 et l'articulation inférieure 14 du bras oblique de soutien 4.

Le mécanisme de blocage selon l'invention se compose des moyens généraux suivants.

Une tête de blocage 15 comportant une structure linéaire de blocage se déplace en translation devant la glissière 12.

Une structure de blocage 16 par encliquetage ou par friction se développe sur une platine linéaire 17 solidaire de la glissière 12. Selon la première variante à blocage par encliquetage, sont conformées dans la platine en une suite linéaire des saillies d'arrêt.

Selon la deuxième variante à blocage par friction, la platine est une surface de friction formée dans une matière appropriée ou une garniture de frottement ou tout moyen équivalent.

On décrira d'abord la variante à blocage par encliquetage. Selon cette variante, la tête de blocage 15 se compose d'un patin d'immobilisation 18 actionné en mouvement de rapprochement et de contact puis d'éloignement et de dégagement vers et au-delà de la structure de blocage 16.

La face frontale du patin d'immobilisation constitue sa surface active de blocage qui présente un relief de blocage 19 complémentaire à celui de la glissière.

Le patin d'immobilisation 18 est actionné en mouvements transversaux à la platine par un dispositif transversal moteur, par exemple du type hydromécanique ou pneumatique, oléopneumatique, ou autre.

Selon une variante préférée, il possède une force mécanique de rappel en position active de blocage.

La glissière 12 est montée sur une base mécanique par une branche mécano-soudée 20 par exemple au châssis du véhicule porteur ou sur toute autre base mécanique supportant la plate-forme de chargement.

On examinera maintenant en détail les moyens particuliers tels que représentés sur les figures.

La glissière 12 est réalisée sous la forme d'un profilé 21 de section générale en C rapporté en applique sur un support linéaire du type longeron 22 à face longitudinale d'appui.

Le profilé 21 de la glissière 12 comporte une face arrière plane 23 en contact d'appui avec la face en regard du longeron 22. Il comporte également une partie centrale en retrait 24 désignée ci-dessus par le terme platine ainsi que deux bords longitudinaux 25, 26 conformés en ailes constituant des rails d'appui et de guidage pour la tête de blocage 15.

La platine linéaire 17 est, selon cette variante, une succession de structures de blocage, par exemple une denture linéaire 27 formant une crémaillère constituée par une succession de dents transversales 28 et de gorges 29 profilées dans la platine. Cette dernière est conformée dans le bloc mécanique de la glissière 12 ou rapportée sur celui-ci.

La glissière 12 est fixe, mais peut pour certaines applications être réalisée inclinable.

La tête de blocage 15 se déplace en translation devant la glissière en utilisant les rails 25 et 26 comme support de guidage.

Elle se compose d'un bloc mécanique 30 présentant de part et d'autre un moyen transversal de blocage, un support d'accrochage 31 et 32 à la manière d'un monorail dont le profilé de glissière à section en U est garni d'une fourrure de glissement 33 et 34 qui prend appui sur le rail correspondant.

Le moyen transversal de blocage comprend le patin d'immobilisation 18 dont le front avant est conformé selon un relief de blocage complémentaire à celui de la platine, ici une denture 35 identique, et un dispositif d'actionnement 36 sous la forme d'un vérin 37 avec rappel mécanique élastique en position de blocage de manière à réaliser une sécurité positive.

Plus particulièrement, le mécanisme d'actionnement est logé dans un corps creux dont la forme extérieure en palier tient lieu d'axe de pivotement 38 sur lequel est monté le poteau basculant 2 du dispositif de levage.

Il comprend une cavité intérieure cylindrique 39 ouverte en partie inférieure et obturée en partie supérieure par une pièce de fermeture 40 à évidement central intérieur 41. La cavité 39 renferme, entre la pièce de fermeture 40 et sa base, un piston creux 42.

L'étanchéité de cet assemblage hydromécanique est assurée par un joint 43 de chambre monté dans une gorge annulaire à l'extrémité inférieure de la cavité 39 et un joint de piston 44 monté dans une gorge annulaire à l'extrémité supérieure de la cavité 39. L'espace entre les deux joints 43 et 44 forme la ou les chambres de pression 45 du vérin 37.

Un ressort 46 de rappel en position de blocage est monté dans le logement délimité par le volume intérieur du corps creux du piston 42 et l'évidement central intérieur 41. Il est comprimé dans la position haute du piston et agit donc comme rappel vers la position basse du piston, c'est-à-dire la position de blocage, de manière à représenter une sécurité positive.

Ce rappel assure le blocage sans pression hydraulique sur le piston.

Le piston creux 42 renferme également une pièce mécanique de liaison 47, sous la forme par exemple d'une tige de liaison 48 traversant la face avant du piston et maintenue à l'intérieur de celui-ci par une douille 49. La tige de liaison 48 se termine par une extrémité conique 50 solidaire d'une pièce mécanique 51 montée flottante dans le patin d'immobilisation 18.

Pour assurer l'adaptation mécanique nécessaire à l'engagement de blocage des structures de blocage, le patin d'immobilisation est guidé avec jeu dans un logement-guide de retrait 52 monté sur des tiges-guides telles que 53, et est monté flottant par l'extrémité conique 50 de la pièce mécanique de liaison 47.

L'invention a été décrite à propos d'une glissière conformée à la manière d'une crémaillère. Il est bien entendu, que les saillies d'arrêt peuvent présenter les formes les plus diverses. On peut citer notamment à cet égard des formes prismatiques trapézoïdales ou autres formes qui peuvent convenir.

Il importe de préciser que les formes des structures de blocage et leur répétition importent peu pour le résultat final.

Par ailleurs, la façon d'actionner le mécanisme de blocage importe peu dès lors que des mouvements de rapprochement et d'éloignement existent.

On décrira maintenant la variante à blocage par friction.

Selon cette variante, la structure de blocage garnissant la platine ou faisant partie de celle-ci présente une surface de friction continue, par exemple comme celle d'une garniture de frein ou de tout autre matériau ou matière analogue.

Une surface de friction diffère d'une surface lisse par sa micro-rugosité.

Les surfaces de friction choisies sont celles assurant un blocage efficace et sur compte tenu des efforts en jeu.

De façon analogue mais non obligatoire, la surface de contact du patin d'immobilisation est une surface de friction.

Le dispositif d'actionnement du patin est un dispositif de pression qui réalisera le blocage en un endroit quelconque le long de la platine.

En effet, le seul contact de pression du front du patin contre la surface de friction immobilise le pied du poteau porteur basculant à l'endroit exact d'immobilisation.

On s'est donc affranchi, de cette façon, de la division en intervalles pour exploiter au mieux la distance entre la sous-face de la plate-forme.

Dans les deux variantes, l'ensemble fonctionne aussi bien en inversant la fonction de mobilité transversale du patin en vue du blocage.

On peut envisager ainsi une glissière 12 mobile transversalement en rapprochement ou en éloignement du patin, lui-même restant dans ce cas dans un plan fixe parallèle à la glissière au cours du mouvement d'élévation du poteau.

On peut envisager également le mouvement mutuel de rapprochement ou d'éloignement de la platine et du patin.

## Revendications

1. Mécanisme de blocage pour dispositif à poteau basculant (2) dont le pied (13) est articule a pivotement sur une tête de blocage (15) se déplaçant linéairement le long d'une glissière (12) pour le levage d'une plate-forme porteuse d'un chargement du type à structure linéaire de blocage le long de laquelle se déplace de façon linéaire le pied (13) du poteau basculant (2), la glissière (12) comprenant une platine linéaire (17) à structures de blocage par rapprochement et la tête de blocage (15) portant un moyen d'immobilisation (18) dont la face active en regard de la platine (17) est conformée selon des structures de blocage coopérant avec celles de la platine linéaire (17) afin de provoquer un blocage puis un déblocage par un mouvement de rapprochement-engagement puis d'éloignement-dégagement entre les structures de blocage de la platine (17) et celles du moyen d'immobilisation (18) par un mécanisme d'actionnement (36), caractérisé en ce que la platine (17) comporte une succession de structures de blocage (28,29) et en ce que le moyen d'immobilisation est constitué par un patin (18) portant une pluralité de structures de blocage (35) complémentaires a celles de la platine.

2. Mécanisme de blocage pour dispositif a poteau basculant (2) dont le pied (13) est articulé a pivotement sur une tête de blocage (15) se déplaçant linéairement le long d'une glissière (12) pour le levage d'une plate-forme porteuse d'un chargement du type à structure linéaire de blocage le long de laquelle se déplace de façon linéaire le pied (13) du poteau basculant (2), la glissière (12) comprenant une platine linéaire (17) à structures de blocage par rapprochement et la tête de blocage (15) portant un moyen d'immobilisation (18) dont la face active en regard de la platine (17) est conformée selon une structure de blocage coopérant avec celle de la platine linéaire (17) afin de provoquer un blocage puis un déblocage par un mouvement de rapprochement-engagement puis d'éloignement-dégagement entre la platine (17) et le moyen d'immobilisation (18) par un mécanisme d'actionnement (36), caractérisé en ce que la structure de blocage (15) de la platine (17) est une surface pourvue de micro-reliefs et en ce que le moyen d'immobilisation est constitué par un patin (18) dont le relief des structures de blocage qu'il porte est une surface à micro-reliefs.

3. Mécanisme selon la revendication 1, caractérisé en ce que les reliefs de blocage mis en contact sont des surfaces dentées.

4. Mécanisme selon la revendication 3, caractérisé en ce que les surfaces dentées présentent un profil en créneaux.

5. Mécanisme selon la revendication 2, caractérisé en ce que les reliefs de blocage mis en contact sont des surfaces de friction.

6. Mécanisme selon les revendications 1 ou 2, caractérisé en ce que le patin (18) d'immobilisation est guidé avec jeu dans un logement-guide (52) monté sur des tiges-guides (53) lors des mouvements de rapprochement et d'éloignement.

7. Mécanisme selon l'une quelconque des revendications précédentes, caractérisé en ce que le mécanisme d'actionnement (36) comprend une cavité cylindrique (39) obturée en partie supérieure par une pièce de fermeture (40) a évidement central intérieur (41), la cavité (39) renfermant entre la pièce de fermeture et sa base un piston creux (42) dont le volume intérieur est occupé par une pièce de liaison avec le patin (18) d'immobilisation, un ressort (46) étant monté dans l'espace intérieur au piston et à la pièce de fermeture afin de constituer une force de rappel dans la position de blocage.

8. Mécanisme selon la revendication 7, caractérisé en ce que la pièce de liaison est une tige de liaison (48) traversant la face avant du piston (42) maintenue à l'intérieur de celui-ci par une douille (49), ladite tige de liaison se terminant par une extrémité conique (50) solidaire d'un élément mécanique (51) monté flottant dans le patin (18) d'immobilisation.

## Claims

1. Locking mechanism for a device having a tilting post (2) of which the foot (13) is articulated in a pivoting manner on a locking head (15) which is displaced in a linear manner along a slide (12) for lifting a load-bearing platform and of the type having a linear locking structure along which the foot (13) of the tilting post (2) is displaced in a linear manner, the slide (12) comprising a linear plate (17) having structures for locking by approaching, and the locking head (15) carrying an immobilisation means (18), the active face of which, which is opposite the plate (17), is shaped to form locking structures cooperating with those of the linear plate (17) in order to cause a locking and then an unlocking by a movement of approaching-engaging and then of separating-disengaging between the locking structures of the plate (17) and those of the immobilisation means (18) by means of an actuating mechanism (36), characterised in that the plate (17) comprises a series of locking structures (28, 29) and in that the immobilisation means is formed by a shoe (18) carrying a plurality of locking structures (35) which are complementary to those of the plate.

2. Locking mechanism for a device having a tilting post (2) of which the foot (13) is articulated in a pivoting manner on a locking head (15) which is displaced in a linear manner along a slide (12) for lifting a load-bearing platform and of the type having a linear locking structure along which the foot (13) of the tilting post (2) is displaced in a linear manner, the slide (12) comprising a linear plate (17) having structures for locking by approaching, and the locking head (15) carrying an immobilisation means (18), the active face of which, which is opposite the plate (17), is shaped to form a locking structure cooperating with that of the linear plate (17) in order to cause a locking and then an unlocking by a movement of approaching-engaging and then of separating-disengaging between the plate (17) and the immobilisation means (18) by means of an actuating mechanism (36), characterised in that the locking structure (15) of the plate (17) is a surface provided with microreliefs and in that the immobilisation means is formed by a shoe (18) of which the relief of the locking structures which it carries is a surface having microreliefs.

3. Mechanism according to Claim 1, characterised in that the locking reliefs which are brought into contact are toothed surfaces.

4. Mechanism according to Claim 3, characterised in that the toothed surfaces have a notched profile.

5. Mechanism according to Claim 2, characterised in that the locking reliefs which are brought into contact are friction surfaces.

6. Mechanism according to Claim 1 or 2, characterised in that the immobilisation shoe (18) is guided with play, during the movements of approaching and separating, in a guide housing (52) mounted on guide rods (53).

7. Mechanism according to any one of the preceding Claims, characterised in that the actuating mechanism (36) comprises a cylindrical cavity (39) which is closed at the upper portion by a closing part (40) having an inner central recess (41), the cavity (39) containing, between the closing part and its base, a hollow piston (42), the inner volume of which is occupied by a part for connection to the immobilisation shoe (18), a spring (46) being mounted in the inner space of the piston and of the closing part in order to provide a force for return into the locking position.

8. Mechanism according to Claim 7, characterised in that the connection part is a connection rod (48) extending through the front face of the piston (42) and held inside the piston by a sleeve (49), the connection rod terminating in a conical end (50) which is firmly attached to a mechanical element (51) mounted in a floating manner in the immobilisation shoe (18).

## Patentansprüche

1. Blockiermechanismus für eine Kippstütze (2), deren Fuß (13) an einem Blockierkopf (15) schwenkbar angelenkt ist, der sich zum Anheben einer lasttragenden Plattform entlang einer Gleitführung (12) mit einer linearen Blockierstruktur bewegt, an der sich der Fuß (13) der Kippstütze (2) linear entlang bewegt, wobei die Gleitschiene (12) eine lineare Platine (17) mit Strukturen zum Blockieren durch Annäherung und der Blockierkopf (15) ein Feststellmittel (18) aufweist, dessen in bezug auf die Platine (17) wirksame Fläche entsprechend den Blockierstrukturen ausgebildet ist und mit diesem zusammenwirkt, um ein Blockieren, wie auch ein Lösen durch eine Bewegung des Annäherns und Eingriffs und des Entfernens und Freigebens zwischen den Blockierstrukturen der Platine (17) und denen des Feststellmittels (18) durch einen Betätigungsmechanismus (36) zu bewirken, dadurch gekennzeichnet, daß die Platine (17) eine Folge von Blockierstrukturen (28, 29) aufweist und daß das Feststellmittel aus einem Schuh (18) mit einer Mehrzahl von Blockierstrukturen (35), die komplementär zu denen der Platine sind, besteht.

2. Blockiermechanismus für eine Kippstütze (2), deren Fuß (13) an einem Blockierkopf (15) schwenkbar angelenkt ist, der sich zum Anheben einer lasttragenden Plattform entlang einer Gleitführung (12) mit einer linearen Blockierstruktur bewegt, an der sich der Fuß (13) der Kippstütze (2) linear entlang bewegt, wobei die Gleitschiene (12) eine lineare Platine (17) mit Strukturen zum Blockieren durch Annäherung und der Blockierkopf (15) ein Feststellmittel (18) aufweist, dessen in bezug auf die Platine wirksame Fläche als eine Blockierstruktur ausgebildet ist, und mit dieser zusammenwirkt, um ein Blockieren, wie auch ein Lösen durch eine Bewegung des Annäherns und Eingriffs und des Entfernens und Freigebens zwischen der Platine (17) und dem Feststelimittel (18) durch einen Betätigungsmechanismus (36) zu bewirken, dadurch gekennzeichnet, daß die Blockierstruktur (15) der Platine (17) eine mit Mikroreliefs ausgestattete Fläche ist, und daß das Feststellmittel durch einen Schuh (18) gebildet ist, dessen Relief aus Blockierstrukturen, die er trägt, eine Fläche mit Mikroreliefs ist.

3. Mechanismus nach Anspruch 1, dadurch gekennzeichnet, daß die in Kontakt gebrachten Reliefs zum Blockieren gezahnte Flächen sind.

4. Mechanismus nach Anspruch 3, dadurch gekennzeichnet, daß die gezahnten Flächen ein zinnenartiges Profil aufweisen.

5. Mechanismus nach Anspruch 2, dadurch gekennzeichnet, daß die in Kontakt gebrachten Reliefs zum Blockieren Reibflächen sind.

6. Mechanismus nach Anspruch 1 oder 2, dadurch gekennzeichnet, daß der Feststellschuh (18) bei den Bewegungen des Annäherns und Entfernens mit Spiel in einer an Führungszapfen (53) angeordneten Führungsaufnahme (52) geführt ist.

7. Mechanismus nach einem der vorangehenden Ansprüche, dadurch gekennzeichnet, daß der Betätigungsmechanismus (36) eine zylindrische Ausnehmung (39) aufweist, die im oberen Bereich durch ein Verschlußstück (40) mit innerer zentraler Aussparung (41) verschlossen ist, wobei die Ausnehmung (39) zwischen dem Verschlußstück und dessen Basis einen Hohlkolben (42) aufnimmt, dessen Innenraum von einem Verbindungsstück mit dem Feststellschuh (18) eingenommen ist und eine Feder (46) im Innenraum des Kolbens und an dem Verschlußstück zur Bildung einer Rückstellkraft in der Blockierposition angeordnet ist.

8. Mechanismus nach Anspruch 7, dadurch gekennzeichnet, daß das Verbindungsstück eine Verbindungsstange (48) ist, die die Vorderseite des Kolbens (42) durchgreift und im Inneren desselben durch eine Hülse (49) gehalten ist, wobei die Verbindungsstange in einem konischen Kopf (50) endet, der an einem Maschinenelement (51) befestigt ist, das lose in dem Feststellschuh (18) angeordnet ist.
